# EUROPEAN PATENT APPLICATION

(11) **EP 1 661 682 A1**
(43) Date of publication of application: **31.05.2006**
(21) Application number: 05110095.6
(22) Date of filing: 27.10.2005
(51) Int. Cl.: B29C 43/24, B29C 43/28, B32B 27/12

(54) **Calendering process for fabricating a laminated ribbon of a textile fabric between silicone films**

(30) Priority: 26.11.2004 IT VA20040058
(71) Applicant: Comerio Ercole S.p.A., 21052 Busto Arsizio (Varese) (IT)
(72) Inventor: Lualdi, Renato Dr., 21052 Busto Arsizio (IT)
(74) Representative: Pellegri, Alberto

(57) **Abstract**

A process for fabricating by calendering a continuous composite ribbon composed of an openly woven fabric even free of side "selvedge" and/or with weft and warp oriented at any angle from 0° to 45° relative to the advancement direction of the ribbon, over both sides of which respective silicone films are permanently coupled, effectively prevents the insurgence of undulations in the finished composite ribbon because of deformations of the open fabric during the coupling step. This result is achieved by:
pre-joining permanently a first silicone film (6) onto a first side of the fabric (T) by laminating them at a load and temperature sufficiently high to produce the coupling of the fabric to the silicone film, between a coupling cylinder (15) and the discharge cylinder (3) of the first film of silicone of the respective pair of laminating cylinders (3,4);
applying the second silicone film (5) produced by the other pair of laminating cylinders (1,2) of the calender onto the other side of the fabric (T), by calendering the fabric pre-joined permanently to the first silicone film and the second silicone firm between the cylinders of the inner pair of cylinders (2,3) of the calender at a relatively low lamination load, for disposing the second silicone film over the fabric pre-joined to the first silicone film, with negligible tensioning of the fabric;
coupling the second silicone film by laminating the composite ribbon at a load and temperature sufficient to determine a permanent joining of the second silicone film to the fabric previously joined permanently to the first silicone film, between cylinders (18,19) of an auxiliary coupling station (17) associated to the calender, establishing weld spots between the silicone of the two silicone films through the openings of the fabric.

An implementing fabrication line is also described.

## Description

The present invention relates in general to fabrication techniques of a composite ribbon, in particular of textile fabric coupled over both surfaces to silicone films.

The coupling of a reinforcement textile fabric with a silicone film commonly is made by calendering, typically by employing a calender having a plurality of cylinders cooperating in pairs, extreme pairs of which are dedicated to form films of silicone by feeding silicone between the two laminating cylinders, the working surface of which is thermally regulated at the temperature of lamination of the silicone, which is commonly comprised between 15 and 50 °C.

The permanent joining together (coupling) of the silicone films with the textile fabric is commonly carried out by an inner pair of cylinders of the machine, carrying the formed silicone films and between which advances the fabric.

The poor affinity of silicone with most of the commonly used textile fibers magnifies the problems of ensuring a secure coupling of the silicone films with the textile fabric specially in case of loosely woven gauze that may be easily deformed by the tension that is normally applied to the fabric in order to ensure a crease-free distension and/or by the lamination of the fabric between the silicone films. Tensile stresses that commonly occurs during the lamination step because of the tension applied to the fabric and even because of inevitable thickness disuniformities that may be present along the width of the calendered composite ribbon, tends to determine irregular stresses in the fabric that result in the appearance of undulations and creases in the laminated ribbon.

Often it is required to laminate silicone films over both sides of a thin loosely woven reinforcing gauze of synthetic fibers, for example of Nomex® that, to further worsen the situation must be free of selvedges. In these conditions of utmost sensibility of the fabric to any substantial tensioning, the above noted problems are enormously accentuated because the reinforcement gauze may deform even in presence of a reduced pull (tensioning) applied to ensure a perfect distension of the fabric being fed between the laminating cylinders carrying preformed silicone films to be coupled to the reinforcement fabric.

The present invention provides an effective solution to these difficulties of a calendering process for fabricating a continuous ribbon of a textile fabric having over both sides silicone films laminated thereon.

According to the present invention, this important result is achieved by carrying out, under conditions of negligible tensioning the coupling of a first silicone film over one side of the fabric, by coupling the two ribbons at a lamination load and temperature sufficient to establish a secure permanent bond between the fabric and the first silicone film, between a first coupling cylinder cooperating with a cylinder of the machine carrying the silicone film that is formed by laminating silicone pellets between a first pair of laminating cylinders.

Successively, a second silicone film is applied over the other side of the fabric, previously coupled with the first silicone film, by calendering the composite ribbon being formed between the cylinders of a central or inner pair of cylinders of the calender, at a lamination load sensibly reduced compared to that necessary for achieving a stable coupling, in order to place and lightly anchor the second silicone film over the bare side of the fabric, practically in absence of any substantial tensioning of the ribbon being formed.

Finally, a secure permanent coupling of the second silicone film, thus disposed and only lightly anchored over the respective side of the fabric, is performed by laminating the ribbon at a lamination load and temperature sufficient to establish a permanent bond also between the second silicone film and the fabric, in a dedicated auxiliary coupling station of the machine, functionally operating downstream the outlet cylinder of the calender proper. During this last step, "weld" spots between the silicone of the two films first and second are established through the openings of the woven fabric.

By carrying out the coupling steps under conditions of practically negligible tensioning on the loosely woven reinforcement fabric, by sequencing the coupling lamination steps of the two silicone films instead of simultaneously coupling both films, then coupling the second silicone film over the bare surface of the fabric, previously coupled to the first silicone film, has been found to effectively prevent formation of undulations and creases, while enhancing adhesion and overall stability of the composite ribbon produced.

According to this invention, it is even possible to realize the laminated composite ribbon by using a gauze with weft and warp oriented at a certain angle, for example at 45°, relative to the longitudinal direction of the ribbon.

The novel process of this invention may be implemented using a common four-cylinder, calender, with a common "S"-type spatial arrangement of the cylinders, as typically used in the rubber industry.

As a whole, the calendering line will include:
feed means of silicone pellets to the calender, distinctly between both extreme pairs of cylinders of the calender that produce by lamination the two films of silicone, respectively;
unwinding means of the fabric to be coupled to the two films of silicone from a feed roll;
loop accumulation means of the unwound fabric;
centering means of the fabric about the longitudinal axis of the inlet line to the calender;
a spreader device on the fabric entering the calender;
a first coupling cylinder of a first one of the two silicone films to one side of the fabric, cooperating with the cylinder carrying the first laminated silicone film of the relative extreme pair of the calender;
an auxiliary coupling station of the second silicone film onto the other side of the fabric onto which the second silicone film is previously applied by an inner pair of cylinders of the calender;
optional unwinding and application means of a protective film over both sides of the composite ribbon;
loop accumulation means functioning in substantial absence of tension for gathering the composite ribbon;
longitudinal and transversal cutters of the produced laminated composite ribbon;
gathering means of cuttings of the composite ribbon.

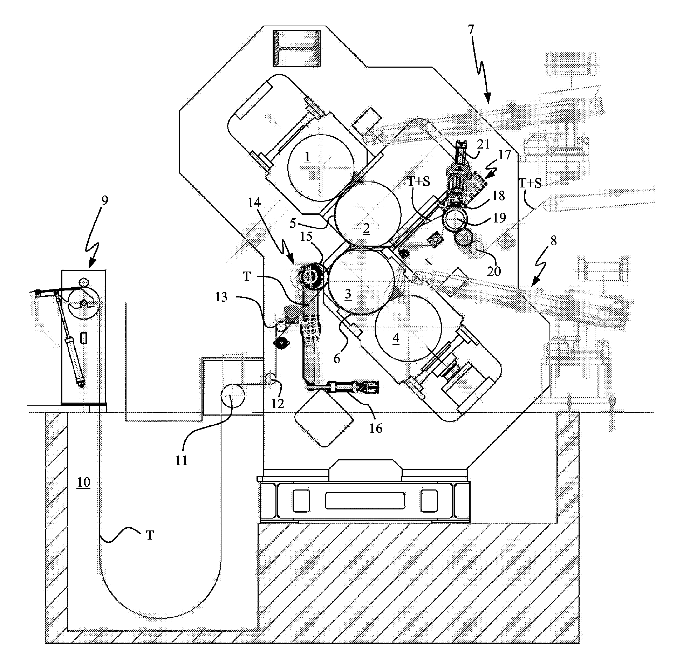

The different aspects of this invention will be more easily recognized through the following description of an embodiment with reference to the attached drawing, in which the significative parts of the machine for fabricating a continuous composite ribbon composed of a fabric onto both sides of which silicone films are permanently joined by lamination are illustrated.

With reference to the figure, the calendering machine of the illustrated embodiment may be based on a four cylinder calender, having the four cylinders 1, 2, 3 and 4 spatially disposed in an "S" arrangement, with the two inner cylinders (inner or pair) disposed on a vertical plane and the two outermost or extreme cylinders 1 and 4 disposed at a certain angle relative to the inner cylinders 2 and 3, respectively, with which they cooperate. Typically, the angle may be of about 45°.

The overall organization and the devices for trimming and adjusting the respective positions of the cylinders of the calender (gap, cross-axis, and the like) may be those typically used in the rubber industry.

The temperature of the working surfaces of the cylinders 1, 2, 3 and 4 of the calender is independently controlled for each cylinder and may be regulated between about 12° up to about 80°C.

The two extreme pairs of cooperating cylinders 1-2 and 3-4, respectively, form the two silicone films 5 and 6, by laminating silicone pellets that are fed respectively between the cylinders 1 and 2 and between the cylinders 3 and 4 by two identical feed conveyers of silicone, indicated as a whole with 7 and 8 in the figure.

These feed conveyers 7 and 8 may be of the type generally used in calenders for producing laminated rubber articles or of materials with comparable rheological and elastic characteristics such as silicone.

The fabrication line comprises an unwinding device of the fabric T, indicated as a whole with 9 in the figure, and of a loop accumulator 10, for practically eliminating any tension on the fabric entering the calender.

The fabric to be coupled to the silicone films is conveyed to the calender, properly centered along the longitudinal central axis of the line by the centering device 11, preferably a slat type centering device.

A practically negligible tension on the fabric T entering the calender is ensured by a load cell system applied on the tensioning cylinder 12 that feedbacks the centering device 11.

In practice, the centering device 11 is driven by a variable speed motor synchronized with the line speed (advancement speed of the fabric T) and controlled by load cells or equivalent sensors of the load acting on the tensioning cylinder 12. The control system is capable of adjusting the tension from a certain maximum value, for example 30 Kg, down to practically 0.

Thereafter, in the fabrication line of the machine, an adjustable spreader device 13 of the fabric eliminates possible longitudinal folds that may be present in the fabric. The spreader device 13 may be commonly composed of two diverging helicoidal surface cylinders rotating in an opposite direction of the direction of advancement of the fabric and their rotation speed is adjusted in function of the advancement speed of the fabric (line speed).

The first coupling device, indicated as a whole with 14, highlighted in the drawing by thicker lines, permanently bond the fabric T to the first silicone film 6 that is carried over the surface of the discharge cylinder 3 of the film produced by the lamination of the fed silicone pellets between the relative extreme pair of laminating cylinders 3 and 4 of the four-cylinder calender.

The coupling cylinder 15 that exerts the permanent bonding load is pneumatically or hydraulically controlled by the actuating cylinder 16 to exert a lamination load that may be precisely adjusted from 0 up to about 50 Kg/cm, or mechanically controlled by equivalent electrically driven actuators.

Commonly the load (lamination load) is greater than about 10 Kg/cm and, generally is adjusted to a value comprised between 15 and 40 Kg/cm. The coupling cylinder 15 may be commonly made of steel and provided with an outer non-sticky elastic coating.

Of course, the temperature of the working surface of the cylinder 3 of the calender that cooperates with the coupling cylinder 15 is controlled to the lamination temperature of the silicone and is generally comprised between 15 and 50 °C.

The cylinder 3 of the calender has a fixed position while the position of the other three cylinders of the calender, namely 1, 2 and 4 may be adjusted through common hydraulically or mechanically controlled precision adjustment devices, such to determine the desired lamination gaps, according to needs.

To the composite ribbon of fabric and of a first film 6 of silicone, permanently joined together, a second silicone film 5, carried by the film discharging cylinder2 of the other extreme pair of silicone laminating cylinders 1 and 2 of the calender, is applied onto the bare surface of the fabric, by calendering the composite ribbon between the central pair of cylinders 2 and 3 of the machine under conditions of practically absence of tension and with a lamination gap such to apply a relatively low lamination load, substantially insufficient to permanently joining the second film of silicone onto the fabric.

Such a deposition of the second silicone film 5 over the bare face of the fabric is carried out with a relatively low lamination load between the two central cylinders 2 and 3 of the calender that generally does not exceeds 10 Kg/cm, depending on the more or less pronounced sensitivity to mechanical stresses of the fabric being used effectively to prevent deformation of the fabric that would cause the appearance of undulations in the finished ribbon.

Finally, the permanent joining of also the second silicone film 5 over the fabric previously pre-joined, on the other side, to the first silicone film, is carried out downstream of the four-cylinder calender, in a dedicated coupling group indicated as a whole with 17 in the figure.

The cylinders 18 and 19 apply a lamination load as determined by the actuator cylinder 21, that is generally comprised between 10 and 50 Kg/cm, to the ribbon composed of the fabric and the first silicone film already pre-joined together in a permanent manner, and the second silicone film, previously applied and only lightly anchored on the opposite bare face of the fabric. This final coupling step causes a certain encroachment of the silicone through the openings of the fabric and determines a fusing (welding) together at a multitude of spots, of the silicone of the two films.

The coupling cylinder 19 may, also in this case, be commonly made on steel and provided with an external anti-adhesion coating, while the cylinder 18 is preferably cooled to a temperature comprised between 8 and 20 °C.

The outlet cylinder 20 of the auxiliary coupling group, on the surface of which the composite laminated ribbon remains in contact for a large portion of its circumference, is cooled by water circulation at a temperature comprised between 8 and 20 °C and rapidly cool-down the finished composite ribbon.

Optionally, peelable-off protective films may be applied onto both sides of the laminated ribbon according to common practices in the field.

The ribbon T + S is thereafter conveyed by rollers and belt conveyor (S) toward a loop accumulator (not shown in figure), for gathering the ribbon produced that may be functionally similar to the feed accumulator 10, without applying any substantial tension on the ribbon, and from there to optional longitudinal and transversal cutters and automatic handler devices of the product, that may be realized in any of the forms as commonly used in fabrication lines of this kind.

## Claims

1. A process for fabricating by calendering a continuous composite ribbon composed of an openly woven fabric even free of side "selvedge" and/or with weft and warp oriented at any angle from 0° to 45° relative to the advancement direction of the ribbon, over both sides of which respective silicone films are permanently coupled, comprising the steps of feeding silicone to two distinct extreme or outermost pairs of laminating cylinders of a multi-cylinder calender for producing said silicone films, the discharge cylinders of said two pairs constituting an inner central pair of cylinders of the calender, and of joining said silicone films over respective sides of the fabric, **characterized in that** it comprises the following steps
pre-joining permanently a first silicone film onto a first side of the fabric by laminating them at a load and temperature sufficiently high to produce a permanent coupling of the fabric and of the silicone film, between a coupling cylinder and the discharge cylinder of the first film of silicone of the respective pair of laminating cylinders;
applying said second silicone film produced by the other pair of laminating cylinders of the calender onto the other side of the fabric, by calendering the fabric pre-joined permanently to said first silicone film and the second silicone firm between the cylinders of said inner pair of cylinders of the calender at a relatively low lamination load, for disposing said second silicone film over the fabric pre-joined to said first silicone film, with negligible tensioning of the fabric;
permanently coupling said second silicone film by laminating the composite ribbon at a load and temperature sufficient to determine a permanent joining of the second silicone film to the fabric previously joined permanently to said first silicone film, between cylinders of a coupling group associated to said calender, establishing weld spots between the silicone of the two silicone films through the openings of the fabric.

2. The process according to claim 1, wherein the lamination load of said first silicone film and said fabric to permanently joined them together is comprised between 10 and 50 Kg/cm, the lamination load between the cylinders constituting said inner pair of the calender is comprised between 0 and 10 Kg/cm and the lamination load between the cylinders of said coupling group of the second silicone film is comprised between 10 and 50 Kg/cm.

3. The process according to claim 1, wherein the temperature of the working surface of the cylinders of said inner pair of the calender is controlled at a temperature comprised between 8 and 20 °C.

4. A fabrication line by calendering of a continuous composite ribbon composed of a open fabric, even free of any selvedge and/or with weft and warp oriented at any angle from 0° to 45° relative to the advancement direction of the ribbon, over both sides of which respective silicone films are permanently joined, comprising silicone feeding means to distinct extreme pairs of laminating cylinders of a multi-cylinder calender for producing said silicone films, the laminated silicone film outlet cylinders of said two extreme pairs constituting an inner pair of cylinders of the calender, **characterized in that** said line of fabrication comprises
unwinding means of said fabric to be coupled to the two films of silicone from a feed roll;
loop accumulation means of the unwound fabric;
centering means of the fabric about the longitudinal axis of a fabric inlet line to the calender;
a spreader device on the fabric entering the calender;
a first coupling cylinder of a first one of the two laminated silicone films to one side of the fabric, cooperating with the outlet cylinder carrying the first laminated silicone film of the relative extreme pair of laminating cylinders of the calender;
an auxiliary coupling station of the second laminated silicone film onto the other side of the fabric onto which the second silicone film is applied through said inner pair of cylinders of the calender;
optional unwinding and application means of a protective film over both sides of the composite ribbon;
loop accumulation means functioning in substantial absence of tension for gathering the composite ribbon;
longitudinal and transversal cutters of the produced laminated composite ribbon;
gathering means of cuttings of the composite ribbon.

5. The fabrication line according to claim 4, wherein said first coupling cylinder and at least a coupling cylinder of said auxiliary coupling station have hydraulic or mechanical means to adjust the lamination load on the composite ribbon to a value comprised between 10 and 50 Kg/cm.

6. The fabrication line according to claim 4, wherein the lamination load applied to the ribbon passing through the cylinders of said inner pair of the calender is comprised between 0 and 10 Kg/cm.
